# EUROPÄISCHE PATENTSCHRIFT

(11) **EP 2 805 088 B1**
(45) Veröffentlichungstag und Bekanntmachung des Hinweises auf die Patenterteilung: **29.11.2017**
(21) Anmeldenummer: 12809582.5
(22) Anmeldetag: 29.11.2012
(51) Int. Cl.: F16J 15/447, F16H 57/029

(54) **GETRIEBE**
TRANSMISSION
TRANSMISSION

(30) Priorität: 17.01.2012 DE 102012000666
(43) Veröffentlichungstag der Anmeldung: 26.11.2014
(73) Patentinhaber: Sew-Eurodrive GmbH & Co. KG, 76646 Bruchsal (DE)
(72) Erfinder: SCHWAN, Tobias, 69168 Wiesloch (DE)
(86) Internationale Anmeldenummer: PCT/EP2012/004926
(87) Internationale Veröffentlichungsnummer: WO 2013/107477

(56) Entgegenhaltungen:
- WO-A1-2009/010127
- WO-A1-2010/009871
- DE-A1- 3 617 863
- US-A- 4 892 000

## Beschreibung

Die Erfindung betrifft ein Getriebe.

Es ist bekannt, bei Getrieben aus dem Getriebegehäuse herausragende Wellen mittels Wellendichtringen abzudichten.

Aus der gattungsgemässe WO 2010/009871 A1 ist ein Getriebe mit einer berührungslos abgedichteten vertikal ausgerichteten Abtriebswelle bekannt.

Aus der US 4 892 000 A ist eine Vorrichtung zur Einschränkung des Schmiermittelflusses bekannt.

Aus der DE 36 17 863 A1 ist eine Spritzring-Labyrinthdichtung bekannt.

Aus der WO 2009/ 010127 A1 ist eine Getriebe-Baureihe bekannt, bei der ein Zahnrad einer ersten Variante, bei der die Abtriebswelle als Hohlwelle ausgebildet ist, ein geringeres Nennmoment aufweist als ein Zahnrad einer anderen Variante, bei der die Abtriebswelle als Vollwelle ausgebildet ist.

Der Erfindung liegt daher die Aufgabe zugrunde, ein Getriebe weiterzubilden, wobei die Dichtheit gewährleistet sein soll, insbesondere in jeder Einbaulage des Getriebes

Erfindungsgemäß wird die Aufgabe bei dem Getriebe nach den in Anspruch 1 angegebenen Merkmalen gelöst.

Wichtige Merkmale der Erfindung bei dem Getriebe sind, dass das Getriebe mit einer vom Getriebeinneren in die Umgebung herausragenden Welle ausgeführt ist,
wobei die Welle mittels zumindest einer berührungslosen Dichtung zu einem die Welle umgebenden Staurohr abgedichtet ist, wobei die zum Getriebeinneren, also dem das Schmieröl umfassenden Raumbereich des Getriebes, hin gerichtete Öffnung der berührungslosen Dichtung oberhalb des sich bei nicht betriebenem Getriebe einstellenden Schmierölfüllstandes angeordnet ist,
wobei die berührungslose Dichtung mittels eines an der Welle ausgebildeten Hinterschnitts, gebildet ist, in den ein in Umfangsrichtung vollständig umlaufend ausgebildeter Innenringabschnitt des Staurohrs hineinragt,
wobei am Staurohr ein weiterer Ringabschnitt ausgebildet ist, welcher nicht vollständig umlaufend ausgebildet ist.

Von Vorteil ist dabei, dass ein Schutz der Dichtung vor im Betrieb erzeugten Wellen oder erzeugtem Schaum vorsehbar ist. Der weitere nicht vollständig umlaufende, einstückig am Staurohr ausgebildete Ringabschnitt ist derart ausformbar, dass die Amplituden der erzeugten Wellen die Höhe der Öffnung der Dichtung übertreffen dürfen. Mittels des vorzugsweise noch höher ausgeführten Ringabschnitts sind die Wellen abhaltbar und/oder ablenkbar von der Öffnung und werden dann auf dem durch den Ringabschnitt verlängerten Weg stark abgedämpft. Somit ist ein Eintreten von Schmieröl in die berührungslose Dichtung verhinderbar. Vorteilig ist auch das einstückige Ausbilden des Ringabschnitts am Staurohr. Somit ist der Ringabschnitt aus dem Rohr in einfacher Weise fertigbar.

Bei einer vorteilhaften Ausgestaltung ist der weitere Ringabschnitt auf größerem Radialabstand angeordnet als der Innenringabschnitt. Von Vorteil ist dabei, dass zwei konzentrische Ringabschnitte am Staurohr ausgeformt oder ausgeschnitten werden. Auf diese Weise ist zusammen mit dem an der Welle, insbesondere an einem Wellenabsatz der Welle, ausgebildeten Hinterschnitt in einfacher Weise eine Labyrinthdichtung herstellbar.

Bei einer vorteilhaften Ausgestaltung ist der Ringabschnitt zwischen der Öffnung und dem zu dieser Öffnung nächstbenachbarten, aus dem Schmierölbad Schmieröl-Wellen und/oder Schmieröl-Schaum erzeugenden Verzahnungsteil angeordnet. Von Vorteil ist dabei, dass die vom Verzahnungsteil beschleunigten Schmierölanteile von der Spaltdichtung, also Labyrinthdichtung, ferngehalten werden.

Bei einer vorteilhaften Ausgestaltung ist der Hinterschnitt in einem axialen Bereich eines Wellenabsatzes ausgebildet. Von Vorteil ist dabei, dass das Werkzeug zur Fertigung des Hinterschnitts in axialer Richtung in den Wellenabsatz eindringen muss. Somit ist eine einfache Fertigung ausführbar.

Bei einer vorteilhaften Ausgestaltung weist das Staurohr größere Radialabstände auf als die Welle im selben axialen Bereich. Von Vorteil ist dabei, dass das Staurohr die Welle umgibt und somit das Schmieröl von der Spaltdichtung fern hält.

Bei einer vorteilhaften Ausgestaltung sind Ringabschnitt und Innenringabschnitt konzentrisch angeordnet und die mittels des Hinterschnitts an der Welle einstückig ausgebildete Tropfkante, insbesondere also Schleuderkante, ist auf einem in einem radialen Bereich zwischen dem Ringabschnitt und dem Innenringabschnitt angeordnet. Von Vorteil ist dabei, dass aus dem Rohteil des Staurohr bei der Fertigung des Staurohrs die beiden Ringabschnitte herausschneidbar, insbesondere durch Drehen, sind. Der nach dem Drehen noch vollständig umlaufend ausgebildete Ringabschnitt wird in einem letzten Arbeitsgang verkürzt, also ein derartiger Teil herausgeschnitten oder gefräst, dass der Ringabschnitt nicht vollständig umlaufend ausgebildet ist.

Bei einer vorteilhaften Ausgestaltung erstreckt sich der Ringabschnitt über weniger als 300°, insbesondere mehr als 50° und/oder weniger als 180°, in Umfangsrichtung. Von Vorteil ist dabei, dass Schmierölanteile, welche zwischen Ringabschnitt und Innenringabschnitt eingedrungen sind in Umfangsrichtung weiterleitbar sind und in dem in Umfangsrichtung nicht von dem Ringabschnitt abgedeckten Bereich herausfließen können in den Ölsumpf zurück. Dabei ist dieser nicht abgedeckte Bereich in axialer Richtung über demjenigen Ölpegel angeordnet, welcher sich bei Nichtbetrieb des Getriebes einstellt.

Hierbei wird vorausgesetzt, dass die Achsrichtung der Welle im Wesentlichen parallel zur Normalenrichtung des Ölpegels ist.

Bei einer vorteilhaften Ausgestaltung ragt die Welle in Gravitationsrichtung nach unten heraus. Von Vorteil ist dabei, dass das Getriebe derart aufstellbar ist, dass die Welle in Gravitationsrichtung nach unten aus dem Getriebegehäuse herausragt und trotzdem Dichtheit gewährleistbar ist.

Bei einer vorteilhaften Ausgestaltung ist die berührungslose Dichtung eine Labyrinth-Dichtung. Von Vorteil ist dabei, dass eine einfach herstellbare Dichtungsart verwendbar ist, die berührungslos, also verschleißfrei, arbeitet und keine aufwendigen Zusatzteile benötigt.

Bei einer vorteilhaften Ausgestaltung ist die berührungslose Dichtung mittels eines auf die Welle aufgeschobenen Rohrstücks und einem mit einem Getriebegehäuseteil verbundenen Staurohr vorgesehen. Von Vorteil ist dabei, dass mit zwei einfach herstellbaren Teilen die berührungslose Dichtung herstellbar ist.

Bei einer vorteilhaften Ausgestaltung weist das Rohrstück eine Tropfkante auf, insbesondere die auf gleichem Radius vorgesehen ist wie eine Absatzkante am Staurohr. Von Vorteil ist dabei, dass einerseits ein Abschleudern von Öltropfen ermöglicht ist und gleichzeitig ein einfaches und klares Ablesen des Abstandes ermöglicht ist.

Bei einer vorteilhaften Ausgestaltung ist das Blechstück schweißverbunden mit dem Staurohr. Von Vorteil ist dabei, dass eine einfach und schnell herstellbare Verbindung verwendbar ist Vorzugsweise ist hierzu ein Loch im Blechstück vorgesehen, an dessen Randbereich die Verschweißung ausgeführt ist.

Bei einer vorteilhaften Ausgestaltung ist das Blechstück im Wesentlichen eben oder gebogen ausgeführt. Von Vorteil ist dabei, dass bei ebener Ausführung das Blechstück einfach herstellbar ist und bei gebogener Ausführung das Blechstück der Form des Zahnrades der vorhergehenden Stufe anpassbar ist, wodurch eine noch bessere Dämpfung der Wellen und des Schaums ermöglicht ist.

Bei einer vorteilhaften Ausgestaltung ist zwischen Welle und Rohrstück eine in einer Ringnut vorgesehene Lamellendichtung vorgesehen. Von Vorteil ist dabei, dass das Dichtsystem noch weiter verbessert ist, indem auch zwischen Welle und Rohrstück eine Dichtung vorgesehen ist.

Bei einer vorteilhaften Ausgestaltung ist eine Einstellvorrichtung zum Einstellen der Lage des Staurohrs vorgesehen. Von Vorteil ist dabei, dass das Staurohr nur eine kurze Auflage im Getriebegehäuse haben darf und trotzdem eine genaue Ausrichtung des Staurohrs ausführbar ist. Vorzugsweise ist die Einstellvorrichtung mittels Stiftschrauben ausgeführt.

Bei einer vorteilhaften Ausgestaltung ist zwischen Staurohr und Getriebegehäuseunterteil und/oder die Welle lagerndem Lager eine Dichtung vorgesehen, insbesondere O-Ring. Von Vorteil ist dabei, dass das Dichtsystem weiter verbessert ist.

Bei einer vorteilhaften Ausgestaltung ist am Getriebegehäuseunterteil ein Deckel aufgesetzt und dicht verbunden, der mindestens eine Wellendichtringaufnahme für Wellendichtringe aufweist, wobei die Wellendichtringe die Welle zum Deckel hin abdichten. Von Vorteil ist dabei, dass zusätzlich noch Wellendichtringe vorsehbar sind.

Bei einer vorteilhaften Ausgestaltung ist am äußeren Bereich der Welle eine Staublippe vorgesehen. Von Vorteil ist dabei, dass

Bei einer vorteilhaften Ausgestaltung ist ein die Welle im Getriebegehäuse lagerndes Lager in einer Fettkammer vorgesehen oder fettgeschmiert. Von Vorteil ist dabei, dass

Bei einer vorteilhaften Ausgestaltung sind ein Zuleitungsrohr für Fett zum Lager hin und ein Ableitungsrohr für Fett vorgesehen. Von Vorteil ist dabei, dass

Bei einer vorteilhaften Ausgestaltung ist das Getriebegehäuse einstückig oder als Unterteil und Oberteil ausgeführt. Von Vorteil ist dabei, dass

Weitere Vorteile ergeben sich aus den Unteransprüchen.

Die Erfindung wird nun anhand von Abbildungen näher erläutert:
In der Figur 1 ist ein abtriebsseitiger Bereich eines erfindungsgemäßen Getriebes in Schnittansicht gezeichnet. In Figur 1a ist ein vergrößerter Ausschnitt dargestellt. Dabei ist das Getriebegehäuse, insbesondere obere und untere Seite aus einem Stück gefertigt. In Figur 1b ist eine Draufsicht auf das Getriebe gezeigt.

In Figur 2 ist ein ähnliches Getriebe aus einem zweigeteilten Gehäuse gefertigt. In Figur 2a ist ein vergrößerter Ausschnitt dargestellt. In Figur 2b ist eine Draufsicht auf das Getriebe gezeigt.

In Figur 3 ist das am Staurohr 1 befestigte Blechstück 4 gezeigt.

In Figur 4 ist ein erfindungsgemäßes Getriebe gezeigt, wobei ein Ringabschnitt 406 am Staurohr 404 ausgebildet ist.

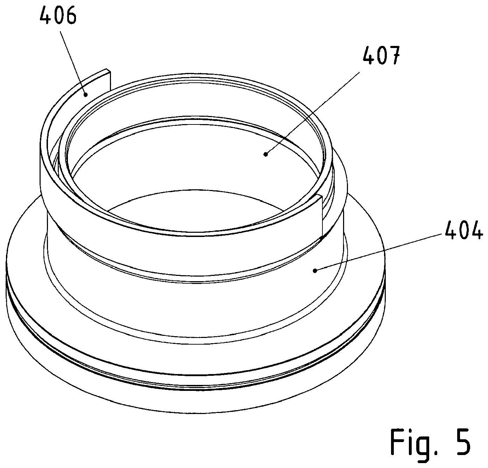

In Figur 5 ist eine Schrägansicht auf das Staurohr 404 gezeigt.

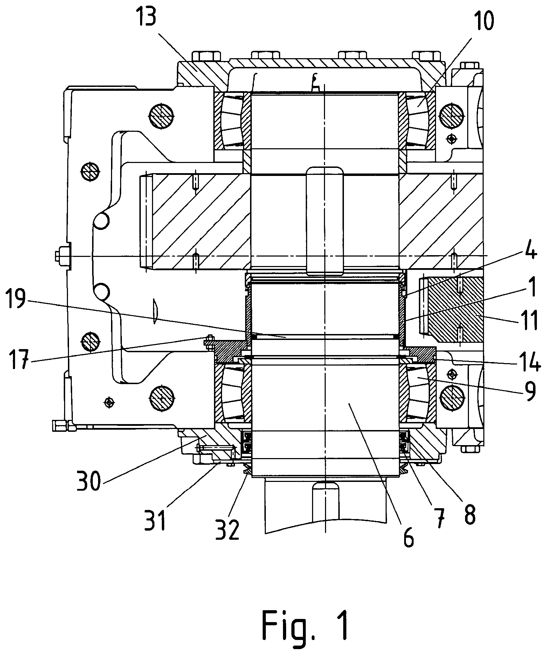

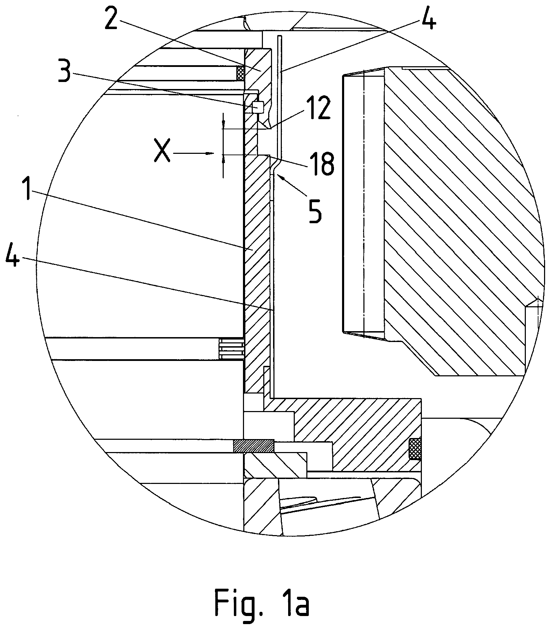

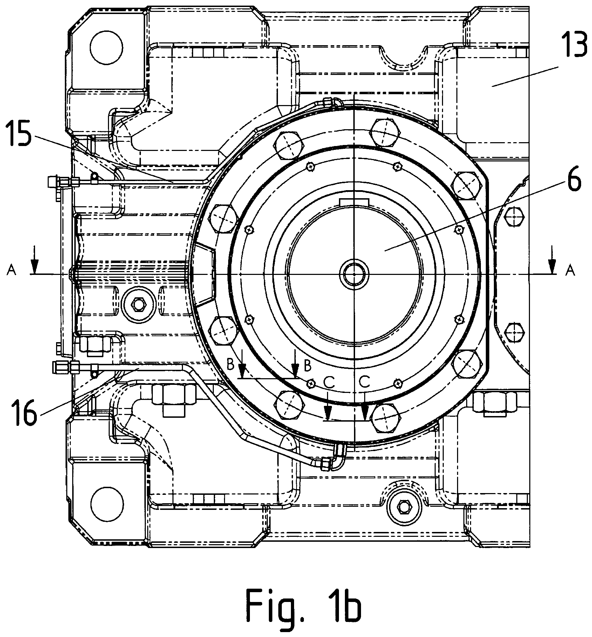

In der Figur 1 ist ein Staurohr 1 gezeigt, das mittels der O-Ring-Dichtung 14 in einer Bohrung des Getriebegehäuses 13 vorgesehen und mit diesem dicht verbunden ist.

Ein Lager 9 der Abtriebswelle 6 ist abtriebsseitig vorgesehen. Dieses Lager 9 ist fettgeschmiert.

Das Staurohr 1 bildet somit zusammen mit dem Getriebegehäuse 13 eine Wanne oder einen schalenförmigen Behälter, in welchen Schmieröl des Getriebes eingefüllt ist und die Verzahnungsteile des Getriebes schmiert.

Zur in den Lagern 9 und 10 gelagerten Abtriebswelle 6 hin ist eine berührungsfreie Dichtung vorgesehen, die vorzugsweise als Labyrinth-Dichtung ausgeführt ist. Hierzu ist auf die Abtriebswelle ein Rohrstück 2 aufgeschoben, das im Dichtungsbereich einen geringen Abstand zum Staurohr 1 hin aufweist. Bei Ausführung der Labyrinth-Dichtung ist dieser Abstandsbereich labyrinthartig ausgeformt. In Figur 1a ist eine einfache Variante gezeigt, bei der die Dichtung zum Getriebeinneren hin und auch nach außen einen schmalen Spalt umfasst, wobei zwischen den beiden Spaltbereichen ein aufgeweiteter Bereich vorgesehen ist.

Zur weiteren Abdichtung der nach unten, also in Gravitationsrichtung aus dem Getriebegehäuse austretenden Abtriebswelle gegen das Getriebegehäuse sind noch zwei weitere hintereinander angeordnete Wellendichtringe 7 und 8 vorgesehen.

Außerdem ist ein Lamellenring 19 zwischen Abtriebswelle 6 und Staurohr 1 zur Abdichtung in einer Ringnut der Abtriebswelle 6 vorgesehen.

Das Rohrstück 2 weist auch zum Getriebeinneren hin eine Tropfkante 12 auf, von der das Schmieröl abschleuderbar ist.

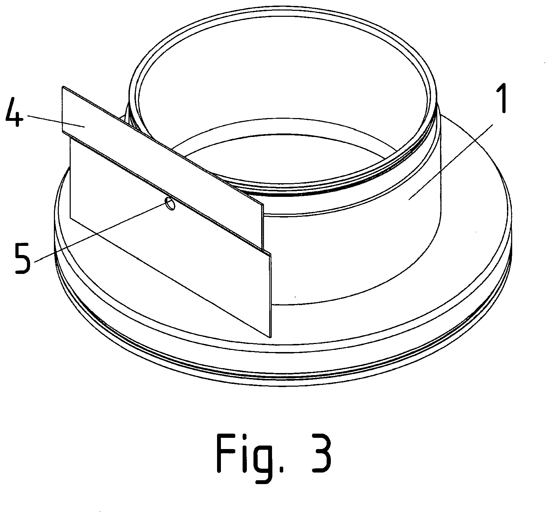

Das Blechstück 4 ist im Wesentlichen eben ausgeführt, wie auch in Figur 1a und 3 ersichtlich ist.

Die Füllhöhe des Schmierstoffbades ist im Ruhezustand niedriger als die Höhe des Öffnungsbereiches der Dichtung. Vorzugsweise ist ein Sicherheitsabstand eingehalten von beispielsweise 10 bis 100 mm.

Wichtig ist dabei, dass das Blechstück 4 die Eintrittsöffnung, also der vom Getriebeinneren aus vorgesehene Öffnungsbereich, der Dichtung zu benachbart angeordneten drehbaren Verzahnungsteilen zumindest teilweise abtrennt. In der Figur 1 ist hierzu das abtriebsseitig angeordnete Zahnrad der vorletzten Stufe des Getriebes dargestellt. Dieses Zahnrad 11 taucht zumindest teilweise ins Schmierstoffbad ein. Wenn dieses in Drehbewegung versetzt ist, wird das Zahnrad 11 und das mit diesem in Eingriff stehende Verzahnungsteil geschmiert. Außerdem werden im Schmierölbad Wellen oder gar Schaum erzeugt. Die Wellenhöhe und/oder Schaumhöhe können hierbei die Höhe der Eintrittsöffnung der Dichtung übertreffen.

Das Blechstück 4 ist jedoch zwischen dem die Wellen und/oder den Schaum zumindest auch erzeugenden Zahnrad 11 und der Abtriebswelle 6 angeordnet. Dabei leitet das Blechstück die Wellen und den Schaum ab von der Abtriebswelle, so dass der kürzeste Weg mittels des Blechstücks 4 versperrt ist. Vorzugsweise überragt das Blechstück 4 mit seinem oberen Randbereich die maximal auftretende Wellenhöhe und Schaumhöhe. Das untere Ende des Wellenstücks 4 ist unterhalb der im Ruhezustand vorhandenen Schmierölfüllstandshöhe vorgesehen.

Vorzugsweise ist das Blechstück 4 zweifach gebogen, wie in Figur 1a und 3 deutlich zu sehen, um einen Versatz zwischen einem ersten ebenen Teilbereich des Blechstücks und einem zweiten Teilbereich des Blechstücks zu erzeugen. Auf diese Weise ist die Tropfkante 12 und der Absatz 18 auf dem gleichen Radius vorsehbar. Ein Vorteil dieser Anordnung ist, dass der Abstand von der Tropfkante 12 zum Absatz 18 einfach und klar messbar ist beim Herstellen des Getriebes und somit das Rohrstück 2 relativ zum Staurohr 1 anordenbar ist.

Das Blechstück 4 ist am Staurohr 1 angeschweißt. Hierzu ist eine Ausnehmung 5 im Blechstück 4 vorgesehen, wobei der Randbereich der Ausnehmung 5 schweißverbunden wird mit dem Staurohr 1. Die Schweißverbindung ist im mittleren Bereich des Blechstücks 4 angebracht, so dass dieses sich nicht verbiegt beim Schweißvorgang. Die Ausnehmung 5 ist vorzugsweise als rundes Loch ausgeführt.

In Figur 1b ist eine Draufsicht auf das Getriebe gezeigt, bei der das Zuleitungsrohr 15 für das Zuleiten von Fett in den Bereich des fettgeschmierten Lagers 9 gezeigt ist. Um Überdruck zu Vermeiden ist ein Ableitungsrohr 16 für das Herausleiten von Fett aus diesem Bereich vorgesehen. Dieser Bereich ist sozusagen als Fettkammer ausgebildet und mittels eines am Getriebegehäuse aufgesetzten Deckels 30, der die Wellendichtringsitze für die Wellendichtringe 7 und 8 aufweist, und einer an diesen Deckel 30 angeschraubten, die Wellendichtringe abdeckenden Scheibe 31 abgedichtet. Zusätzlich ist noch außerhalb der Scheibe 31 eine Staublippe 32 zum Schutz gegen grobe Schmutzteile vorgesehen.

Mittels der Einstellvorrichtung 17 ist eine Lageeinstellung des Staurohrs 1 ausführbar. Die Einstellvorrichtung 17 ist beispielsweise mittels am Umfang des Staurohrs vorgesehenen Stiftschrauben bewirkbar. Vorteilhaft hat sich erwiesen, wenn am Umfang des Staurohrs drei regelmäßig voneinander beabstandete Stiftschrauben vorgesehen werden.

Der in einer Ringnut der Abtriebswelle vorgesehene Lamellenring 19 stellt die Dichtheit der Verbindung zwischen Abtriebswelle 6 und Staurohr 1 her.

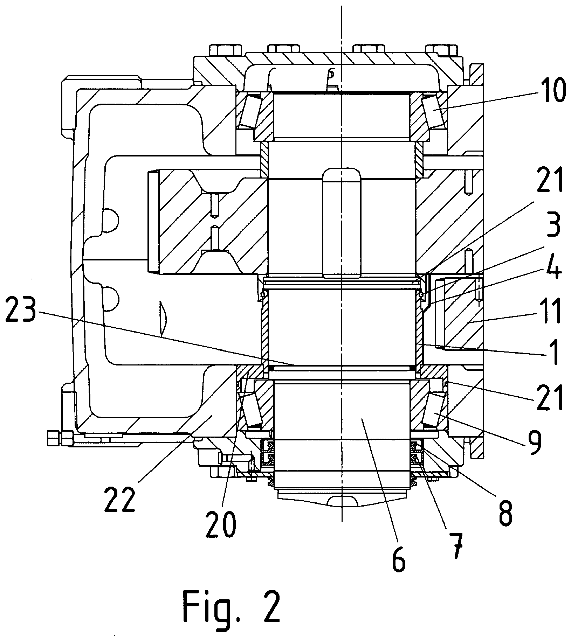

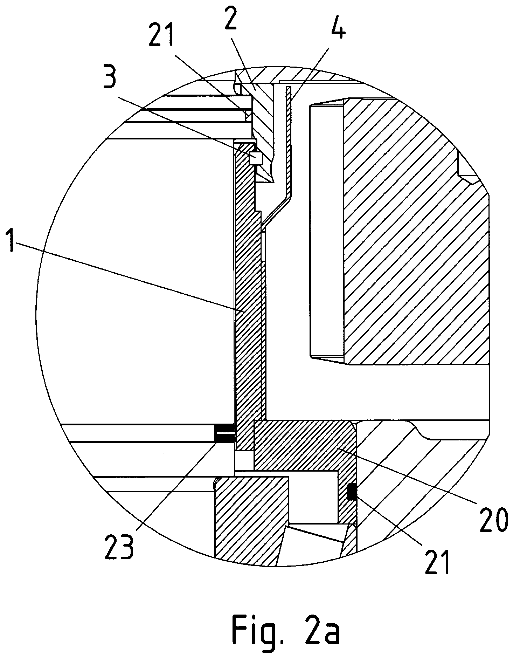

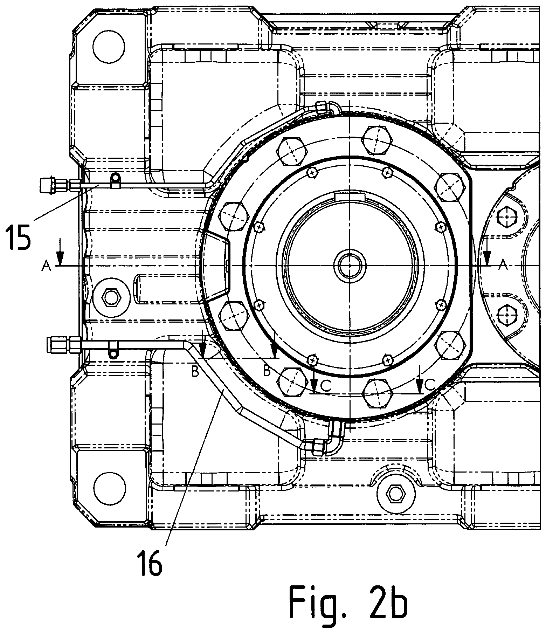

In der Figur 2 ist eine zum Getriebe nach Figur 1 ähnliche Ausführung gezeigt, wobei allerdings das Gehäuse zweigeteilt ausgeführt ist, also aus einem Gehäuseunterteil und einem Gehäuseoberteil zusammengesetzt ist.

Auch ist bei Figur 2 die Verbindung vom Lager 9 zum Staurohr 20 mittels der O-Ring-Dichtung 21 und vom Staurohr 20 zur Abtriebswelle 6 mittels des Lamellenrings 23 abgedichtet.

Da jedoch die Führung des Staurohrs 20 am Getriebegehäuseunterteil 22 axial länger ausführbar ist, ist keine Einstellvorrichtung 17 notwendig.

Das Blechstück 4 passt bei Montage durch die das Lager 9 aufnehmende Bohrung im Getriebegehäuseunterteil 22.

Bei weiteren erfindungsgemäßen Ausführungsbeispielen wird statt der Abtriebswelle eine Zwischenwelle oder die eintreibende Welle mit dem erfindungsgemäßen Dichtsystem, umfassend die Labyrinthdichtung, verwendet. Auch ist das Prinzip auf beliebige aus einem Gehäuse heraustretenden Wellen anwendbar.

Bei weiteren erfindungsgemäßen Ausführungsbeispielen ist das Blechstück anstatt im Wesentlichen eben vorzugsweise gebogen ausgeführt. Somit ist das Blechstück der Form des Zahnrades 11 in etwa nachführbar. Somit schirmt das Blechstück 4 vom Zahnrad 11 her verlaufende Wellen und Schaum besser ab und die Labyrinthdichtung ist noch besser schützbar.

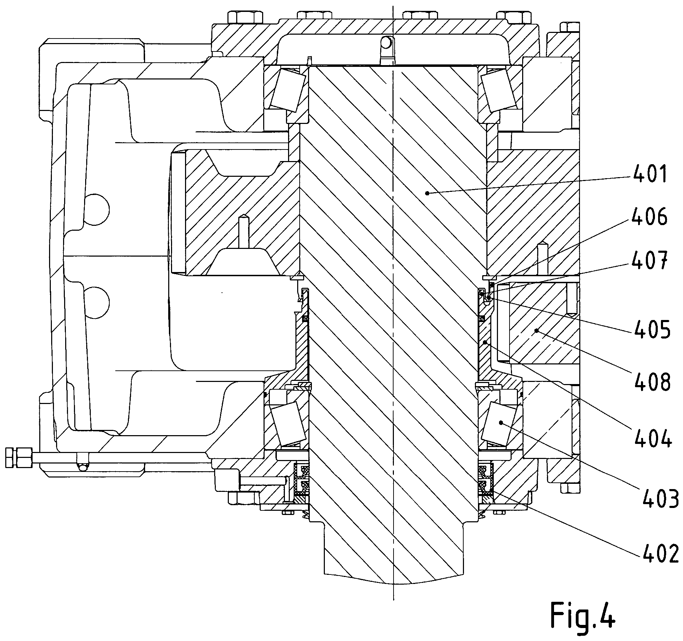

Wie in Figur 4 gezeigt, ist bei dem dortigen Getriebe eine Abtriebswelle 401 über ein abtriebsseitiges Lager 403 der Abtriebswelle 401 in einem Gehäuseteil des Getriebes gelagert.

Dabei ist die Welle zum Gehäuseteil hin mittels zweier Wellendichtringe abgedichtet oder mittels einer Wellendichtringanordnung mit zumindest zwei Dichtlippen.

Wiederum ragt die Abtriebswelle 401 aus dem Gehäuseteil in Gravitationsrichtung nach unten heraus. Somit ist also die Wellenachse der Abtriebswelle 401 im Wesentlichen parallel zur Normalenrichtung des Ölpegels, also der im Wesentlichen ebenen Oberfläche des Ölsumpfes des Getriebes, welcher sich bei Nicht-Betrieb des Getriebes einstellt.

Ein Staurohr 404 ist mit dem Gehäuseteil dicht verbunden, insbesondere mittels einer O-Ring-Dichtung, und ist parallel zur Abtriebswelle 401 ausgerichtet.

Bei nicht betriebenem Getriebe ragt das obere Ende des Staurohrs 404 aus dem Schmieröl heraus. Es erstreckt sich also in axialer Richtung, also parallel zur Wellenachsrichtung der Abtriebswelle 401, weiter. Es ragt somit aus dem Ölpegel heraus.

Im Betrieb, also bei drehenden Verzahnungsteilen des Getriebes, wird vom Verzahnungsteil 408, welches auf einer anderen Welle des Getriebes angeordnet ist, Schmieröl bewegt und es entstehen Öl-Wellen, Öl-Spritzer und/oder Ölschaum. Diese bewegten Ölanteile erreichen größere Höhen als der Ölpegel im Ruhezustand.

Zum Schutz der Spaltdichtung zwischen Staurohr 404 und Abtriebswelle 401 weist das Staurohr 404 einen Ringabschnitt 406 auf, welcher in Umfangsrichtung nicht vollständig umläuft, insbesondere weniger als 300°, insbesondere weniger als 190°. Vorzugsweise erstreckt sich der Ringabschnitt 406 in Umlaufrichtung, also Umfangsrichtung, um mehr als 60°.

Der Ringabschnitt 406 erstreckt sich in axialer Richtung über den axial vom Spaltdichtungsbereich abgedeckten Bereich hinaus. Somit ist auch aufgewelltes, aufgeschäumtes oder spritzendes Schmieröl abwehrbar vom Spaltdichtungsbereich. Die Welle 401 weist einen Wellenabsatz auf, in dessen Bereich ein Hinterschnitt eingearbeitet ist. Mittels des Hinterschnitts ist an der Welle ein Kragenabschnitt 405 an der Abtriebswelle 401 ausgebildet, so dass dieser als Tropfkante wirksam ist. Bei Drehbewegung der Welle 401 wird somit Schmieröl abgespritzt und an der Innenseite des Ringabschnitts 406 aufgefangen, abwärts geleitet und am Fußbereich des Ringabschnitts 406 in Umfangsrichtung weitergeleitet.

Da der Ringabschnitt 406 nicht vollständig umlaufend ausgebildet ist, fließt das aufgefangene Schmieröl an dem in Umfangsrichtung liegenden Endbereich des Ringabschnitts 406 in den Ölsumpf zurück.

Ein in Umfangsrichtung vollständig umlaufend ausgebildeter Innenringabschnitt 407 ist auf kleinerem Radialabstand als der Ringabschnitt 406 am Staurohr 404 ausgebildet und ragt in den an der Welle 401 ausgebildeten Hinterschnitt zumindest teilweise hinein.

Somit ist mittels des Innenringabschnitt 407 gesichert, dass aufgefangenes Öl nicht abtriebsseitig herausfließt sondern im Innenbereich des Getriebes zurückgehalten bleibt.

Das abtriebsseitige Lager 403 und die abtriebsseitige Dichtung, insbesondere Wellendichtring 402, sind somit mit Fett schmierbar, also ohne dasjenige Schmieröl betreibbar, welches im Getriebeinneren für die miteinander im Eingriff stehenden Verzahnungen der Verzahnteile eingesetzt ist.

### Bezugszeichenliste

1 Staurohr
2 Rohrstück
3 Labyrinth-Dichtung
4 Blechstück
5 im Blech vorgesehene Ausnehmung zum Herstellen einer Schweißverbindung
6 Abtriebswelle
7 Wellendichtring
8 Wellendichtring
9 abtriebsseitiges Lager der Abtriebswelle
10 zweites Lager der Abtriebswelle
11 abtreibendes Zahnrad der vorletzten Stufe des Getriebes
12 Tropfkante
13 Getriebegehäuse
14 O-Ring-Dichtung
15 Zuleitungsrohr für Fett
16 Ableitungsrohr für Fett
17 Einstellvorrichtung
18 Absatz
19 Lamellenring
20 Staurohr
21 O-Ring-Dichtung
22 Getriebegehäuseunterteil
23 Lamellenring
30 Deckel
31 Scheibe, aufgeschraubt auf Deckel 30
32 Staublippe
401 Abtriebswelle
402 Wellendichtring
403 abtriebsseitiges Lager der Abtriebswelle 401
404 Staurohr
405 Kragenabschnitt an der Abtriebswelle 401, insbesondere erzeugt durch Hinterschnitt
406 Ringabschnitt
407 Innenringabschnitt

## Patentansprüche

1. Getriebe mit einer vom Getriebeinneren in die Umgebung herausragenden Welle (401), die Welle (401) mittels zumindest einer berührungslosen Dichtung zu einem die Welle (401) umgebenden Staurohr (404) abgedichtet ist, wobei die zum Getriebeinneren, also dem das Schmieröl umfassenden Raumbereich des Getriebes, hin gerichtete Öffnung der berührungslosen Dichtung oberhalb des sich bei nicht betriebenem Getriebe einstellenden Schmierölfüllstandes angeordnet ist, **dadurch gekennzeichnet, dass** die berührungslose Dichtung mittels eines an der Welle (401) ausgebildeten Hinterschnitts, gebildet ist, in den ein in Umfangsrichtung vollständig umlaufend ausgebildeter Innenringabschnitt (407) des Staurohrs (404) hineinragt, und dass am Staurohr (404) ein weiterer Ringabschnitt (406) einstückig ausgebildet ist, welcher nicht vollständig umlaufend ausgebildet ist, und dass der weitere Ringabschnitt (406) und der Innenringabschnitt (407) konzentrisch angeordnet sind.

2. **Getriebe nach Anspruch 1,**
**dadurch gekennzeichnet, dass**
der weitere Ringabschnitt (406) auf größerem Radialabstand angeordnet ist als der Innenringabschnitt (407).

3. Getriebe nach mindestens einem der vorangegangenen Ansprüche,
**dadurch gekennzeichnet, dass**
der weitere Ringabschnitt (406) zwischen der Öffnung und dem zu dieser Öffnung nächstbenachbarten, aus dem Schmierölbad Schmieröl-Wellen oder Schmieröl-Schaum erzeugenden Verzahnungsteil angeordnet ist.

4. Getriebe nach mindestens einem der vorangegangenen Ansprüche,
**dadurch gekennzeichnet, dass**
der Hinterschnitt in einem axialen Bereich eines Wellenabsatzes ausgebildet ist.

5. Getriebe nach mindestens einem der vorangegangenen Ansprüche,
**dadurch gekennzeichnet, dass**
das Staurohr (404) größere Radialabstände aufweist als die Welle (401) im selben axialen Bereich.

6. Getriebe nach mindestens einem der vorangegangenen Ansprüche,
**dadurch gekennzeichnet, dass**
die mittels des Hinterschnitts an der Welle (401) einstückig ausgebildete Tropfkante, auf einem in einem radialen Bereich zwischen dem weiteren Ringabschnitt (406) und dem Innenringabschnitt (407) angeordnet ist.

7. Getriebe nach mindestens einem der vorangegangenen Ansprüche,
**dadurch gekennzeichnet, dass**
der weitere Ringabschnitt (406) sich in Umfangsrichtung über mehr als 50° und weniger als 300° erstreckt.

8. Getriebe nach mindestens einem der vorangegangenen Ansprüche,
**dadurch gekennzeichnet, dass**
die Welle (401) in Gravitationsrichtung nach unten herausragt.

9. Getriebe nach mindestens einem der vorangegangenen Ansprüche,
**dadurch gekennzeichnet, dass**
die berührungslose Dichtung eine Labyrinth-Dichtung (3) ist

10. Getriebe nach mindestens einem der vorangegangenen Ansprüche,
**dadurch gekennzeichnet, dass**
mittels des Hinterschnitts an der Welle (401) eine Tropfkante ausgebildet ist, die auf gleichem Radius vorgesehen ist wie eine Absatzkante am Staurohr (404).

11. Getriebe nach mindestens einem der vorangegangenen Ansprüche,
**dadurch gekennzeichnet, dass**
eine Einstellvorrichtung zum Einstellen der Lage, des Staurohrs (404) vorgesehen ist.

12. Getriebe nach mindestens einem der vorangegangenen Ansprüche,
**dadurch gekennzeichnet, dass**
zwischen Staurohr (404) und Getriebegehäuseunterteil oder die Welle (401) lagerndem Lager (403) eine Dichtung vorgesehen ist.

13. Getriebe nach mindestens einem der vorangegangenen Ansprüche,
**dadurch gekennzeichnet, dass**
am Getriebegehäuseunterteil ein Deckel aufgesetzt und dicht verbunden ist, der mindestens eine Wellendichtringaufnahme für Wellendichtringe (402) aufweist, wobei die Wellendichtringe (402) die Welle (401) zum Deckel hin abdichten.

14. Getriebe nach mindestens einem der vorangegangenen Ansprüche,
**dadurch gekennzeichnet, dass**
am äußeren Bereich der Welle (401) eine Staublippe vorgesehen ist.

15. Getriebe nach mindestens einem der vorangegangenen Ansprüche,
**dadurch gekennzeichnet, dass**
ein die Welle (401) im Getriebegehäuse lagerndes Lager (403) in einer Fettkammer vorgesehen ist oder fettgeschmiert ist.

16. Getriebe nach mindestens einem der vorangegangenen Ansprüche,
**dadurch gekennzeichnet, dass**
ein Zuleitungsrohr für Fett zum Lager (403) hin und ein Ableitungsrohr für Fett vorgesehen sind.

17. Getriebe nach mindestens einem der vorangegangenen Ansprüche,
**dadurch gekennzeichnet, dass**
das Getriebegehäuse einstückig oder als Unterteil und Oberteil ausgeführt ist.

## Claims

1. Transmission having a shaft (401) which projects out from the interior of the transmission into the surroundings,
the shaft (401) is sealed off from a pressure tube (404) surrounding the shaft (401), by means of at least one contactless seal, wherein the opening in the contactless seal, which is directed towards the interior of the transmission, that is to say the spatial region of the transmission which surrounds the lubrication oil, is arranged above the lubrication oil filling level which occurs when the transmission is not being operated,
**characterised in that**
the contactless seal is formed by means of an undercut which is constructed on the shaft (401) and into which an inner ring section (407) of the pressure tube (404), constructed so as to run completely around in the circumferential direction, projects,
and **in that** a further ring section (406), constructed so as to not completely run around, is constructed in one piece on the pressure tube (404),
and **in that** the further ring section (406) and the inner ring section (407) are concentrically arranged.

2. Transmission according to claim 1,
**characterised in that**
the further ring section (406) is arranged at a greater radial distance than the inner ring section (407).

3. Transmission according to at least one of the preceding claims,
**characterised in that**
the further ring section (406) is arranged between the opening and the toothing part nearest adjacent to this opening, which toothing part generates lubrication oil waves or lubrication oil foam from the lubrication oil bath.

4. Transmission according to at least one of the preceding claims,
**characterised in that**
the undercut is constructed in an axial region of a shaft step.

5. Transmission according to at least one of the preceding claims,
**characterised in that**
the pressure tube (404) has greater radial distances than the shaft (401) in the same axial region.

6. Transmission according to at least one of the preceding claims,
**characterised in that**
the drip edge constructed in one piece on the shaft (401) by means of the undercut is arranged on a in a radial region between the further ring section (406) and the inner ring section (407).

7. Transmission according to at least one of the preceding claims,
**characterised in that**
the further ring section (406) extends over more than 50° and less than 300° in the circumferential direction.

8. Transmission according to at least one of the preceding claims,
**characterised in that**
the shaft (401) projects out downwards in the direction of gravity.

9. Transmission according to at least one of the preceding claims,
**characterised in that**
the contactless seal is a labyrinth seal (3).

10. Transmission according to at least one of the preceding claims,
**characterised in that**
a drip edge is constructed by means of the undercut on the shaft (401), which drip edge is provided at the same radius as a step edge on the pressure tube (404).

11. Transmission according to at least one of the preceding claims,
**characterised in that**
an adjusting device for adjusting the position of the pressure tube (404) is provided.

12. Transmission according to at least one of the preceding claims,
**characterised in that**
a seal is provided between the pressure tube (404) and the transmission case lower part or the bearing (403) supporting the shaft (401).

13. Transmission according to at least one of the preceding claims,
**characterised in that**
a cover is placed on the transmission case lower part and sealingly connected, which cover has at least one shaft sealing ring receptacle for shaft sealing rings (402), wherein the shaft sealing rings (402) seal the shaft (401) off from the cover.

14. Transmission according to at least one of the preceding claims,
**characterised in that**
a dust lip is provided on the outer region of the shaft (401).

15. Transmission according to at least one of the preceding claims,
**characterised in that**
a bearing (403) supporting the shaft (401) in the transmission case is provided in a grease chamber or is grease-lubricated.

16. Transmission according to at least one of the preceding claims,
**characterised in that**
a feed tube for grease towards the bearing (403) and a discharge tube for grease are provided.

17. Transmission according to at least one of the preceding claims,
**characterised in that**
the transmission case is designed in one piece or as lower part and upper part.

## Revendications

1. Transmission dotée d'un arbre (401) dépassant de l'intérieur de la transmission dans l'environnement,
l'arbre (401) étant rendu étanche au moyen d'au moins un joint sans contact par rapport à un tube de retenue (404) entourant l'arbre (401), l'ouverture du joint sans contact tournée vers l'intérieur de la transmission, donc vers l'espace de la transmission contenant l'huile de lubrification, étant disposée au-dessus du niveau de remplissage d'huile de lubrification qui s'établit lorsque la transmission n'est pas en fonctionnement, **caractérisée en ce**
**que** le joint sans contact est formé au moyen d'une contre-dépouille réalisée sur l'arbre (401), dans laquelle pénètre une partie annulaire intérieure (407) du tube de retenue (404) réalisée de façon entièrement périphérique dans la direction circonférentielle, et qu'une autre partie annulaire (406) est réalisée d'une seule pièce sur le tube de retenue (404), laquelle est réalisée de façon non entièrement périphérique, et
**que** l'autre partie annulaire (406) et la partie annulaire intérieure (407) sont disposées concentriquement.

2. Transmission selon la revendication 1,
**caractérisée en ce**
**que** l'autre partie annulaire (406) est disposée à une plus grande distance radiale que la partie annulaire intérieure (407).

3. Transmission selon au moins l'une des revendications précédentes,
**caractérisée en ce**
**que** l'autre partie annulaire (406) est disposée entre l'ouverture et la partie de denture la plus proche de cette ouverture, produisant des vagues d'huile de lubrification et/ou de l'écume d'huile de lubrification à partir du bain d'huile de lubrification.

4. Transmission selon au moins l'une des revendications précédentes,
**caractérisée en ce**
**que** la contre-dépouille est réalisée dans une zone axiale d'un épaulement d'arbre.

5. Transmission selon au moins l'une des revendications précédentes,
**caractérisée en ce**
**que** le tube de retenue (404) présente de plus grandes distances radiales que l'arbre (401) dans la même zone axiale.

6. Transmission selon au moins l'une des revendications précédentes,
**caractérisée** en ce
le larmier réalisé d'une seule pièce au moyen de la contre-dépouille sur l'arbre (401) est disposé sur un (...) dans une zone radiale entre l'autre partie annulaire (406) et la partie annulaire intérieure (407).

7. Transmission selon au moins l'une des revendications précédentes,
**caractérisée en ce**
**que** l'autre partie annulaire (406) s'étend sur plus de 50° et moins de 300° dans la direction circonférentielle.

8. Transmission selon au moins l'une des revendications précédentes,
**caractérisée en ce**
**que** l'arbre (401) dépasse vers le bas dans la direction de la gravité.

9. Transmission selon au moins l'une des revendications précédentes,
**caractérisée en ce**
**que** le joint sans contact est un joint à labyrinthe (3).

10. Transmission selon au moins l'une des revendications précédentes,
**caractérisée en ce**
**qu'**un larmier est réalisé au moyen de la contre-dépouille sur l'arbre (401), lequel est prévu sur le même rayon qu'un bord d'épaulement sur le tube de retenue (404).

11. Transmission selon au moins l'une des revendications précédentes,
**caractérisée en ce**
**qu'**un dispositif de réglage pour régler la position du tube de retenue (404) est prévu.

12. Transmission selon au moins l'une des revendications précédentes,
**caractérisée en ce**
**qu'**un joint est prévu entre le tube de retenue (404) et la partie inférieure du carter de transmission ou un palier (403) supportant l'arbre (401).

13. Transmission selon au moins l'une des revendications précédentes,
**caractérisée en ce**
**qu'**un couvercle est monté et relié de manière étanche sur la partie inférieure du carter de transmission, lequel présente au moins un logement de bague d'étanchéité d'arbre pour des bagues d'étanchéité d'arbre (402), les bagues d'étanchéité d'arbre (402) assurant l'étanchéité de l'arbre (401) par rapport au couvercle.

14. Transmission selon au moins l'une des revendications précédentes,
**caractérisée en ce**
**qu'**une lèvre anti-poussière est prévue sur la zone extérieure de l'arbre (401).

15. Transmission selon au moins l'une des revendications précédentes,
**caractérisée en ce**
**qu'**un palier (403) supportant l'arbre (401) dans le carter de transmission est prévu dans une chambre à graisse ou est lubrifié à la graisse.

16. Transmission selon au moins l'une des revendications précédentes,
**caractérisée en ce**
**qu'**un tube d'amenée de graisse au palier (403) et un tube d'évacuation de graisse sont prévus.

17. Transmission selon au moins l'une des revendications précédentes,
**caractérisée en ce**
**que** le carter de transmission est réalisé d'une seule pièce ou sous la forme d'une partie inférieure et d'une partie supérieure.
